# EUROPEAN PATENT APPLICATION

(11) **EP 1 722 496 A1**
(43) Date of publication of application: **15.11.2006**
(21) Application number: 05710100.8
(22) Date of filing: 10.02.2005
(51) Int. Cl.: H04B 17/00, H04N 17/00

(54) **WIRELESS COMMUNICATION SYSTEM, TRANSMITTER APPARATUS, RECEIVER APPARATUS, CONTROL METHOD OF WIRELESS COMMUNICATION SYSTEM, CONTROL PROGRAM OF WIRELESS COMMUNICATION SYSTEM, AND RECORDING MEDIUM HAVING RECORDED THAT PROGRAM THEREIN**

(30) Priority: 13.02.2004 JP 2004036882
(71) Applicant: SHARP KABUSHIKI KAISHA, Osaka-shi, Osaka 545-8522 (JP)
(72) Inventor: TANAKA, Mitsunori, Chiba 272-0032 (JP)
(74) Representative: Müller, Frithjof E.
(86) International application number: PCT/JP2005/002048
(87) International publication number: WO 2005/078973

(57) **Abstract**

A wireless communications system confirms whether or not it is in an inspection process mode (S1). If the system is in the inspection process mode, the number of selectable communications channels is set at 7 (S2). Next, usable communications channels are set so that a different communications channel is used in each inspection requiring wireless communications (S3 to S6). This prevents communications performed in the wireless communications system in an inspection from being interfered from communications performed in another wireless communications system in another inspection. Then, after the inspection process is ended, the number of the selectable communications channels is set at 3 (S2). Thus, the number of user-selectable communications channels is limited, and a user is not troubled in selecting a communications channel.

## Description

### TECHNICAL FIELD

The present invention relates to: (a) a transmitting device and a receiving device which are capable of wirelessly communicating with each other via wireless communications such as wireless LAN (Local Area Network) by using a plurality of communications channels; (b) a wireless communications system having the transmitting and receiving devices; (c) a wireless communications system controlling method; (d) a wireless communications system controlling program; and (e) a storage medium storing the wireless communications system controlling program. Specifically, the present invention relates to, for example, the wireless communications system in which image data is transmitted from the transmitting device and the receiving device, and is displayed. In particular, the present invention relates to the wireless communications system which is capable of being subject to a process of inspecting communications ability of plural antennas.

### BACKGROUND ART

While transportable display devices, such as liquid crystal television devices and CRT (Cathode Ray Tube) television devices, are suggested in recent years, there are suggested wireless communications systems in which a video signal is transmitted from a transmitting device to a receiving device by using SS (Spread Spectrum) wireless method complying with IEEE802.11 or IEEE802.11b. Such wireless communications systems include not only a system which adopts the above wireless method, but also a system which adopts: (i) a wireless method for use in the next-generation mobile phone devices whereby acceleration of data transfer speed possible or PHS^{®} (Personal Handy-Phone System); and/or (ii) Bluetooth^{®} wireless method.

Incidentally, these wireless methods requires an antenna. The length of an antenna in general for a frequency band of 2.4 GHz used in the SS wireless method and Bluetooth^{®} wireless method or the like is approximately 3 cm. This is equivalent to 1/4 of the wireless wave length.

Furthermore, there is a wireless method which uses 5GHz band. In such a method, OFDM (Orthogonal Frequency Division Multiplexing) in compliance with IEEE802.11a is adopted.

In these wireless methods, a plurality of communications channels can be used, and a user is able to select a different communications channel in a case of interference.

As an antenna of a wireless communications system, there is a configuration having a pair of main antenna elements each of which is perpendicular to each other (See Patent document 1). By arranging each of the pair of antenna elements so that the antenna elements are perpendicular to each other, it is possible to ensure the gain in every direction, and to realize a reception capability to correspond to a change in polarized wave surface and direction of electric wave radiated from a transmitting member.

A transmitting device for receiving image data and transmitting the image data by using SS wireless method, and a display device for receiving the image data having been transmitted from the transmitting device are subjected to the following inspection process prior to the shipment of these devices. Namely, while each member is housed, a predetermined video is transmitted from the transmitting device, and a displaying condition of the video displayed on the display device is checked to judge whether the devices are good or not.

In such an inspection process, a plurality of communications channels are set for inspection, for the purpose of avoiding interference. In relation to the setting of the communications channels, Patent document 2 describes a television set having an audio wireless transmitting device which enables wireless remote listening. More specifically, an audio intermediate frequency having converted by a converter is transmitted, with a use of a minute electric wave, on a channel selected by a switching device. In a case where a plurality of identical receivers are at the same place, the interference is avoided by setting a transmitting channel for each receiver. The similar configuration can be applied to communications channels for transmitting video signals instead of audio signals. Further, under IEEE802.11/11b/11a/11g, which are frequently adopted in products (e.g. wireless LAN) using an electric wave at a frequency band such as ISM (industrial scientific medical) band and 2.4GHz or 5GHz band, which band does not require an electric wave license, it is possible to set, in accordance with a carrier frequency, (i) a plurality of communications channels, and (ii) how the communication channels are switched.

Here, the Patent document 1 is Japanese Unexamined Patent Publication No. 278903/1990 (Tokukaihei 2-278903; published on November 15, 1990).

Further, the Patent document 2 is Japanese Registered Utility Model Gazette No. 302677 (Published on February 6, 1996).

### DISCLOSURE OF INVENTION

If the number of communications channels is too many, interference is prevented, even if an identical product is placed nearby, by changing a setting of the communications channel. However, too many settable communications channels give a user unnecessary setting values. This may trouble the user at the time of operation. On the contrary, a largest possible selection of communications channels are wished in an inspection process, for the purpose of preventing interference or the like from an identical product.

In view of the problems, it is an object of the present invention to provide a wireless communications system or the like which allows prevention of interference from an identical product placed nearby, in an inspection process of an electronic device having a wireless transmission function, while avoiding provision of too many settable communications channels to a user.

In order to achieve the foregoing object, the present invention is a wireless communications system including a transmitting device and a receiving device each of which is capable of performing wireless communications on a plurality of communications channels, wherein: the number of user-selectable communications channels which a user in general is able to select is less than the number of communications channels set at a time of an inspection process.

More specifically, in a wireless communications system having been shipped, the number of usable communications channels is less than the number of settable communications channels in the transmitting device and/or the receiving device.

In the above configuration, the number of usable communications channel available for a user is made less than the number of settable communications channels. Thus, the user is not troubled in selecting a communications channel.

Further, the number of user-selectable communications channels is less than the number of selectable communications channels set in the inspection process. This saves a user from being unnecessarily troubled at the time of carrying out an adjustment, while preventing interference from an adjacent wireless communications system in the production line.

Further, the wireless communications system of the present invention having the above configuration is adapted so that said user-selectable communications channels are randomly set at the end of the inspection process.

In the configuration, the user-selectable communications channels are randomly set. This reduces the possibility that shipped wireless communications systems have the same selectable communications channels. Thus, interference from another system is more effectively prevented, even when a user carries out an adjustment.

Incidentally, a frequency band usable in a wireless communications system may overlap, at its boundary region, with another frequency band usable in a wireless communications system of different type. In this case, a quality of communications on a communications channel assigned to a frequency at the boundary region may be deteriorated due to interference from communications in the different type wireless communications system.

In view of that, it is preferable that said user-selectable communications channels are channels successively selected from channels assigned on a frequency-by-frequency basis, in order from a channel closer to the center of a usable frequency band in said wireless communications system.

Further, the wireless communications system of the present invention having the foregoing configuration includes: channel limitation means for selecting the usable communications channels from the settable communications channels; and remote instruction means for (i) determining at least one of the usable communications channels and (ii) remotely indicating, to the channel limitation means, said at least one of communications channels determined.

With the configuration, it is possible to remotely indicate the usable communications channels. As such, the limitation of communications channels is easily done before the shipment.

Note that the channel limitation means is preferably provided in both of the transmitting device and the receiving device. However, it is possible to provide the channel limitation means in only one of the transmitting device and the receiving device. The same effect is obtained in this case as well, since wireless communications is performed on the communications channels limited by the channel limitation means.

Further, the wireless communications system of the present invention having the foregoing configuration is adapted so that each of said transmitting device and the receiving device includes channel limitation means for selecting the usable communications channels from said settable communications channels; and the channel limitation means of one of said transmitting device and the receiving device (i) determines at least one of said usable communications channels and (ii) wirelessly transmits information of said at least one of usable communications channels determined, to the channel limitation means of another one of said transmitting device and the receiving device, via a predetermined communications channel.

In the configuration, determining of the usable communications channels in one of the transmitting device of the receiving device allows the channel limitation means of both of the transmitting device and the receiving device to control the usable communications channels in the same manner, since information of the determined communications channels are transmitted to the another one of the transmitting device or the receiving device. Note that the determined communications channels do not have to include the predetermined communications channel.

Further, the wireless communications system of the present invention having the foregoing configuration is adapted so that said channel limitation means randomly selects the usable communications channels from the settable communications channels.

In the configuration, the usable communications channels are randomly selected from the settable communications channels prior to the shipment. This reduces the possibility that shipped wireless communications systems have the same selectable communications channels. Thus, it is possible to improve a capability of preventing interference.

Incidentally, as described above, a quality of communications on a communications channel assigned to a frequency in the boundary region of a frequency band usable in a wireless communications system of different type may be deteriorated due to interference from communications in the different type wireless communications system. This problem, however, is solved by not placing the different type wireless communications system in the production site.

In view of that, the wireless communications system of the present invention having the foregoing configuration is adapted so that amongst channels assigned on a frequency-by-frequency basis, said channel limitation means excludes, from a choice of the usable communications channels, a channel nearby the boundary of a usable frequency band in the wireless communications system.

In the configuration, the number of usable communications channels are ensured before the shipment by using, before the shipment, the usable communications channels of the wireless communications system, including channels nearby the boundary of the usable frequency band. On the other hand, after the shipment, the channels nearby the boundary are excluded, so that deterioration in the quality of communications due to the interference is avoided under a user's using environment. Thus, it is possible to efficiently utilize communications channels.

Note that, in the above wireless communications system, a use of a transmitting device serving as the above described transmitting device will result in the above described effects. Further, in the above wireless communications system, a use of a receiving device serving as the above described receiving device will result in the above described effects.

A method of the present invention for controlling a wireless communications system is a method for controlling a wireless communications system including a transmitting device and a receiving device each of which is capable of performing wireless communications on a plurality of communications channels, the method including the step of: selecting one or more usable communications channels from settable communications channels, in said transmitting device and/or receiving device.

With the method, it is possible to limit and reduce the number of communications channels usable for a user or the like. Therefore, the user is not troubled when selecting a communications channel.

Note that the channel limitation means of the wireless communications system can be realized on a computer by executing a wireless communications system controlling program. Further, by storing the wireless communications system controlling program in a computer-readable storage medium, the wireless communications system controlling program can be executed on an arbitrary computer.

Additional objects, features, and strengths of the present invention will be made clear by the description below. Further, the advantages of the present invention will be evident from the following explanation in reference to the drawings.

### BRIEF DESCRIPTION OF DRAWINGS

Fig. 1 is a perspective view illustrating an exterior appearance of a wireless communications system of an embodiment in accordance with the present invention.
Fig. 2(a) is a perspective view illustrating a configuration of an inverted L antenna for use in a video transmitting device and a display unit in the wireless communications system.
Fig. 2(b) is a perspective view illustrating a configuration of an inverted F antenna for use in a video transmitting device and a display unit in the wireless communications system.
Fig. 3 is an exploded view illustrating a schematic configuration of the video transmitting unit.
Fig. 4 is an exploded view illustrating a schematic configuration of the display unit.
Fig. 5 is a functional block diagram illustrating a schematic configuration of the wireless communications system.
Fig. 6 is an explanatory diagram illustrating a screen displayed on the display unit in an inspection process of the wireless communications system.
Fig. 7 is a timing chart showing the timing of activating/deactivating a function of an antenna of the video transmitting device, in the inspection process.
Fig. 8 is a flow chart showing steps of setting communications channels in the wireless communications system.

### BEST MODE FOR CARRYING OUT THE INVENTION

The following describes an embodiment of the present invention with reference to the drawings annexed hereto.

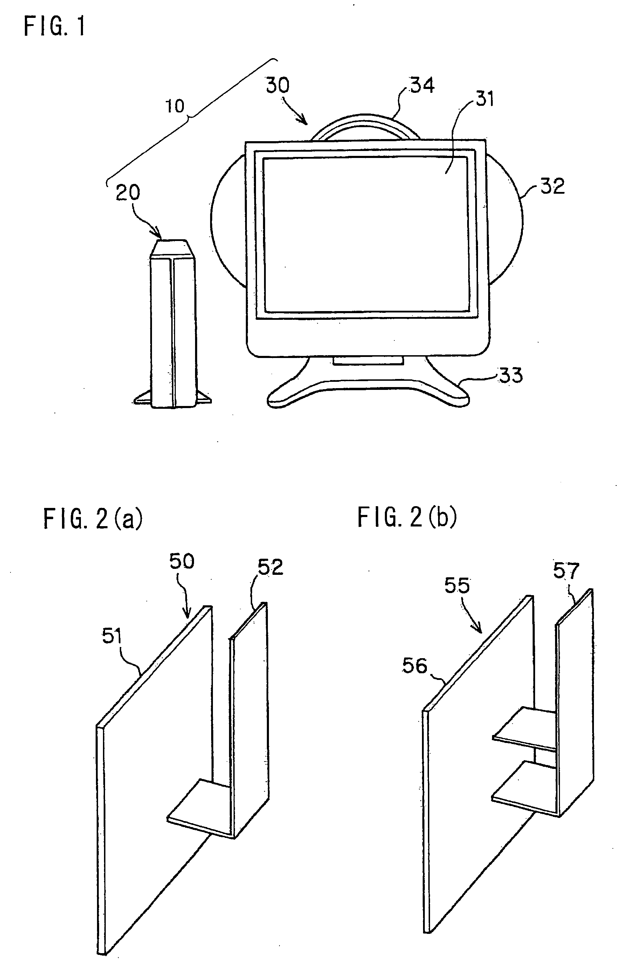

Fig. 1 illustrates an exterior appearance of a wireless communications system of the present embodiment. As illustrated, the wireless communications system 10 includes a combination of: (a) a video transmitting unit (transmitting device) 20 for receiving video data, and transmitting image data based on the received video data, by using SS wireless method; and (b) a disposable display unit (receiving device) 30 for receiving the image data and displaying an image based on the received image data.

For example, the video transmitting unit 20 is preferably transmitting means which uses a carrier wave at a frequency band of several GHz order or more, so as to (i) receive CATV (Cable Television) signals and television electric waves, and (ii) transmit to the display unit 30 a relatively large quantity of video signals. Accordingly, for example, it is preferable that a communications method adopted be so-called SS wireless method such as direct diffusion (DS) method and Frequency Hopping (FH) method.

The display unit 30 mainly includes: a display screen section 31 configured by a liquid crystal panel; semicircular speaker storage sections 32 arranged on left and right sides of the display screen section 31; a stand 33; a video processing circuit (not shown); and a handle 34 for carrying the display unit 30. As described, the display screen section 31 includes the liquid crystal panel. However, the display screen section 31 is not particularly limited to this, as long as the display screen section 31 is configured by a member constituting a display element. It is particularly preferable to adopt a thin display element which is suitable for being carried around. Such a thin display element may be, for example, an organic/inorganic EL (Electroluminescence) display element, an FED (Field Emission Display) element, a plasma display element, or the like.

Each of these transmitting/receiving devices (video transmitting unit 20 and display unit 30) adopting SS wireless method includes: a circuit having transmitting means or the like, and a plurality of antennas or the like.

Figs. 2(a) and 2(b) are perspective views each illustrating a configuration of an antenna for use in the units 20 and 30. Fig. 2(a) illustrates an inverted L antenna, and Fig. 2(b) illustrates an inverted F antenna. The inverted L antenna 50 includes a rectangular antenna substrate 51, and an antenna element section 52 made of a metal plate whose side face is in the shape of an inverted "L". On the other hand, the inverted F antenna 55 includes a rectangular antenna substrate 56, and an antenna element section 57 made of a metal plate whose side face is in the shape of an inverted "F". It is not a concern which type of the antennas is used, however the inverted F antenna is used in the present embodiment.

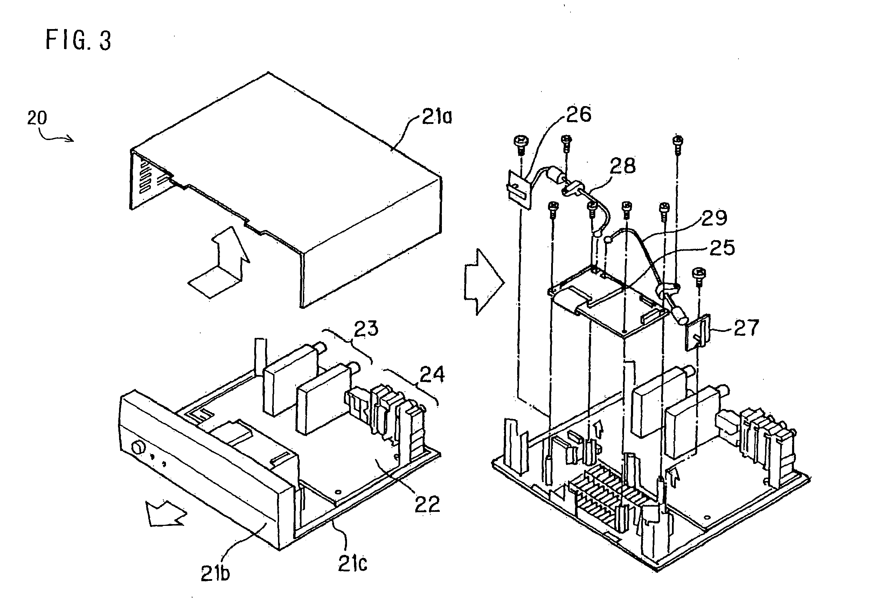

Fig. 3 illustrates a schematic configuration of the video transmitting unit 20. As illustrated, the video transmitting unit 20 has a housing which includes a top face cover 21 a and a front face panel 21b which are detachable, and a bottom face cover 21c. The housing houses therein a member such as a center substrate 22 having thereon a tuner section 23, video terminal 24, or the like. Further, as illustrated, in the housing of the video transmitting unit 20, two antennas 26 and 27 are arranged so that the antennas 26 and 27 are orthogonal to each other. The antennas 26 and 27 are connected to a wireless communications transmitting section 25 via cables 28 and 29, respectively. Thus, the antennas are arranged in a direction perpendicular to each other, as is an arrangement of later-described antennas in the display unit 30, and as the result, the gain in every direction is ensured. In this way, it is possible to realize a reception capability which corresponds to a change in the polarization surface and direction of an electric wave radiated from the transmitting member used in wireless communications.

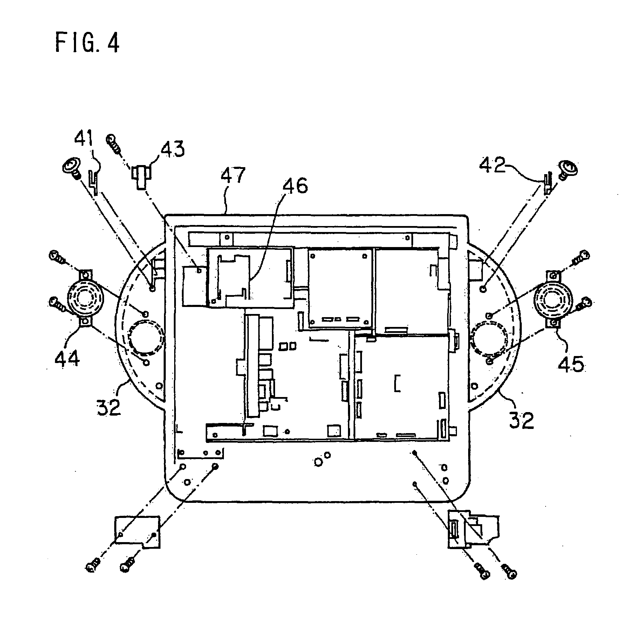

Fig. 4 illustrates a schematic configuration of the display unit 30. As illustrated, the display unit 30 includes antennas 41 to 43 each of which is fixed on a front face cabinet 47 of the display unit 30 by using a screw, and is connected to a wireless communications receiving section 46 via a cable (not shown). The antenna 41 and 42 are respectively arranged above the speakers 44 and 45 in the speaker storage sections 32 so that the mounting directions of the antennas 41 and 42 differs from each other by 90°. The antenna 43 is arranged in the part where the display screen section 31 is stored so that the mounting direction of the antenna 43 differs from those of the antennas 41 and 42 by 90°. As described, the antennas 41 to 43 are arranged so that the respective directions of the antennas 41 to 43 are perpendicular to one another. This ensures the gain in every direction. Further, it is possible to realize a reception capability which corresponds to a change in polarized surface and direction of electric wave radiated from the transmitting member used in wireless communications.

Note that the antennas of the units 20 and 30 are arranged in perpendicular directions to one another. However, the present invention is not limited to this provided that the antennas are arranged in different directions. Further, the number of the antennas are not particularly limited, as long as the number of the antennas is not less than two.

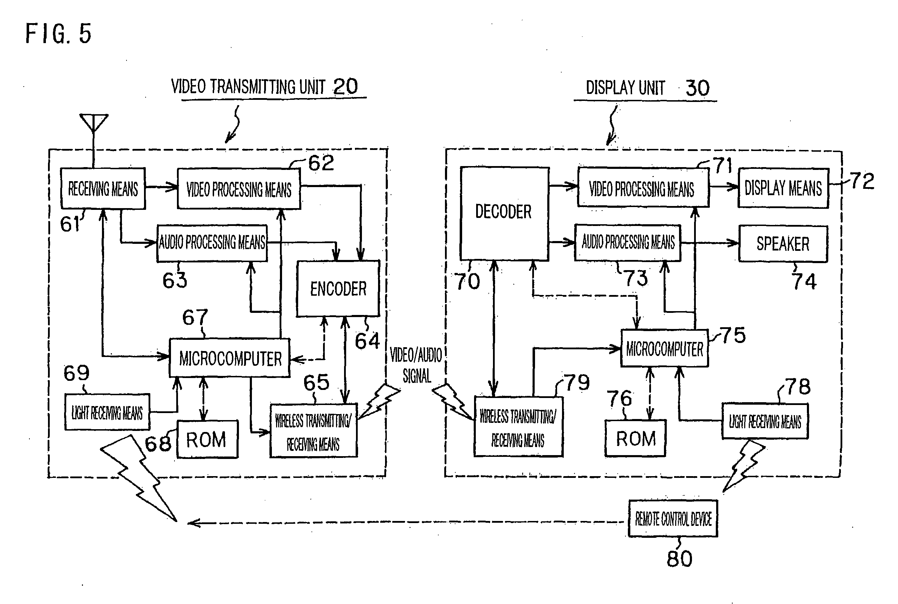

Fig. 5 illustrates a schematic configuration of the wireless communications system 10 provided with the video transmitting unit 20 and the display unit 30. As illustrated, the video transmitting unit 20 generally includes: receiving means 61 for receiving a broadcast signal; video processing means 62 for processing a video signal in the broadcast signal having been received; audio processing means 63 for processing an audio signal in the broadcast signal having been received; an encoder 64 for compressing signals having been processed in the video processing means 62 and audio processing means 63; wireless transmitting/receiving means 65 for transmitting, to the display unit 30, signals (including audio and video signals) having been compressed by the encoder 64; a microcomputer (channel limitation means) 67 for controlling the video transmitting unit 20; and an ROM 68 or the like.

Meanwhile, the display unit 30 generally includes: wireless transmitting/receiving means 79 for receiving a signal transmitted from the wireless transmitting/receiving means 65 of the video transmitting unit 20; a decoder 70 for decompressing the signal having been received by the wireless transmitting/receiving means 79; video processing means 71 for processing a video signal having been decompressed by the decoder 70; display means 72 for displaying video based on the video signal having been processed in the video processing means 71; audio processing means 73 for processing an audio signal having been decompressed by the decoder 70; a speaker 74 for outputting audio based on the audio signal having been processed by the audio processing means 73; a microcomputer (channel limitation means)75 and an ROM 76 each for controlling the display unit 30; light receiving means 78 for receiving a signal from a remote controller (remote indication means) 80 for controlling the display unit 30.

In the video transmitting unit 20, a series of the following processes is mainly performed. Namely, the video processing means 62 performs a signal processing such as a process of removing a video carrier wave or the like from a broadcast signal having been received by the receiving means 61. Then, for the purpose of performing a resending process, the encoder 64 performs a video compressing process or the like, and the resulting signal is superimposed on a carrier frequency, which is set by the wireless transmitting/receiving means 65, and is transmitted to the display unit 30. In order to appropriately perform these processes, the video transmitting unit 20 is provided with the microcomputer 67, and the ROM 68 for storing and retaining various setting values. It is possible to provide light receiving means 69 for receiving a control signal from a remote controller 80, for the purpose of modifying the setting values stored in the ROM 68 with an intermediary of the microcomputer 67. Alternatively, the following communications route may be also possible. Namely, the control signal from the remote controller 80 may be wirelessly communicated to the microcomputer 67, via the light receiving means 78, the microcomputer 75, the wireless transmitting/receiving means 79, and the wireless transmitting/receiving means 65.

In the display unit 30, a series of the following processes is performed. Namely, a signal transmitted from the wireless transmitting/receiving means 65 is received by the wireless transmitting/receiving means 79, and the received signal is subjected to a processing such as removal of communications wave or the like. Then, a video decompression process or the like is performed in the decoder 70, and a video signal processing or the like is performed in the video processing means 71. Thus, a video is displayed on the display means 72. In order to appropriately perform these processes, the display unit 30 is provided with the microcomputer 75, and the ROM76 for storing and retaining various setting values. In order to modify the setting values stored in the ROM 76 with an intermediary of the microcomputer 75, a predetermined signal from the remote controller 80 is transmitted to the microcomputer 75 via the light receiving means 78. As described, various controls of the display unit 30 are performed, by transmitting a control signal from the remote controller 80 to the microcomputer 75 via the receiving means 78.

The microcomputers 67 and 75 are capable of controlling the video transmitting unit 20 and the display unit 30 respectively, by reading out a control program stored in a storage device (storage medium) such as the ROMs 68 and 76, and executing the read out control programs.

Further, the wireless transmitting/receiving means 65 includes the wireless communications transmitting section 25, the antennas 26 and 27, and the cables 28 and 29. Similarly, the wireless transmitting/receiving means 79 includes a wireless communications transmitting section 46, antennas 41 to 43; and cables (not shown).

Incidentally, various inspections are conducted with respect to the video transmitting unit 20 and the display unit 30 in an inspection process carried out prior to the shipment. In the following described is an exemplary inspection process in which a communications capability of an antenna is inspected.

The power of all video transmitting units 20 and display units 30 are in the on-state during the inspection process. Further, the antennas of the display units 30 are in operable state, while the functions of the antennas of the video transmitting units 20 are deactivated.

That is, the microcomputer 75 of each of the display units 30 is able to receive a signal from the wireless transmitting/ receiving means 79 having the antennas 41 to 43, while a signal output from the microcomputer 67 of each of the video transmitting unit 20 to the wireless transmitting/receiving means 65 having the antennas 26 and 27 is halt. This status is realized by using a control function provided to each of the microcomputers 67 and 75, which function is related to signal input/output in relation to the wireless transmitting/receiving means 65 and 79. Note that, with the use of the remote controller 80, a worker is able to instruct the microcomputers 67 and 75 to turn on/off their respective signal input/output in relation to the wireless transmitting/receiving means 65 and 79.

Next, the worker uses the remote controller 80 to instruct the microcomputer 67 of the video transmitting unit 20 subject to the inspection to turn on its signal output to the antenna. Next, for the pair of the video transmitting unit 20 and the display unit 30 on the inspection line, the worker selects antennas to be inspected by using the remote controller 80. In short, the worker selects antennas to be functioned. Here, the worker selects at least one antenna for each of the video transmitting unit 20 and the display unit 30. Then, the antennas are successively selected so that the communications capabilities of the antennas are found based on the combination of the selected antennas.

A selection signal from the remote controller 80 is input to the light receiving means 69 and 78, and is transmitted to the microcomputers 67 and 75. Thus, the microcomputers 67 and 75 respectively activate the functions of selected antennas out of: (i) the antennas 26 and 27 of the wireless transmitting/receiving means 65 and (ii) the antennas 41 to 43 of the wireless transmitting/ receiving means 79.

Alternatively, the selection signal from the remote controller 80 may be input to the light receiving means 69, and the microcomputer 67 may selectively activate the antennas 26 and 27 of the wireless transmitting/receiving means 65, while transmitting an instruction of the selected antenna in the display unit 30, to the microcomputer 75 via the wireless transmitting/receiving means 65 and 79.

Next, trial image data is input to the wireless transmitting/ receiving means 65 via the receiving means 61, the video processing means 62 and the encoder 64. Then, the microcomputer 67 of the video transmitting unit 20 causes transmission of the trial image data, by using SS wireless method, from the wireless transmitting/receiving means 65 to the wireless transmitting/ receiving means 79 in the display unit 30. The microcomputer 75 of the display unit 30 causes the display means 72 to display the image data having been input thereto via the wireless transmitting/receiving means 79, the decoder 70, and the video processing means 71. Then, the worker judges whether or not the reception is good by comparing the received image displayed on the display means 72 with a reference image. Thus, since the communications status can be inspected by functioning at least one antenna in the video transmitting unit 20 and the display unit 30, it is possible to inspect whether or not the antenna is good, based on a combination of the antennas being functioning.

Note that the reception status may be judged as follows. Namely, a received signal may be compared with a reference signal with a use of an inspection device. Alternatively, it is possible to use the inspection device for reading out an image having been received, and to compare the image with a reference image.

After the inspection, the worker use the remote controller 80 for switching off the signal output from the microcomputer 67 to the wireless transmitting/receiving means 65 in the video transmitting unit 20.

In the above case, only the antennas in a video transmitting unit 20 not being inspected are deactivated (signal output to the antenna is halt) before the inspection. However, it is possible to deactivate only the antennas in the display unit 30, or to deactivate the antennas of the both video transmitting unit 20 and display unit 30, before the inspection is performed. In such cases, the remote controller 80 is used for activating the antennas at the time of inspection.

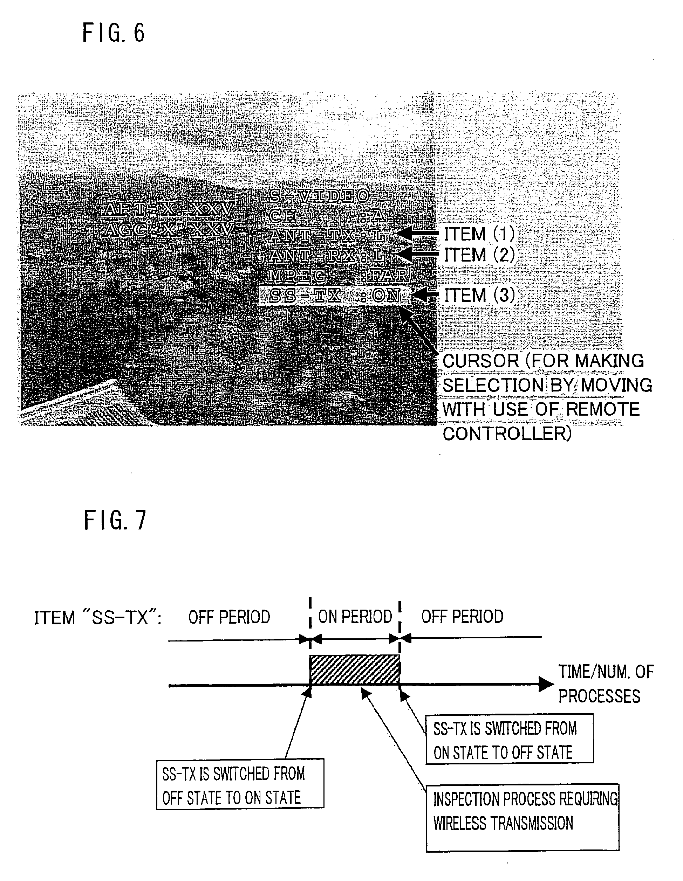

Further, the microcomputer 75 transmits the antenna selection information to the vide processing means 71, and the information is converted, by the video processing means 71, into symbols to be displayed on the display means 72. Fig. 6 illustrates a display screen displaying a trial image and various information including antenna selection information. In the figure, the antenna selection information is displayed in the form of text. Each of the text symbols are set as follows.

Item (1) "ANT-TX" is for selecting an antenna of the video transmitting unit 20.

Selections:
"L" ⇒ antenna 26 is designated;
"R" ⇒ antenna 27 is designated;
"D" ⇒ one of the antennas 26 and 27 is automatically selected.

Item (2) "ANT-RX" is for selecting an antenna of the display unit 30 is selected.

Selections:
"L" ⇒ antenna 41 is designated;
"R" ⇒ antenna 42 is designated;
"C" ⇒ antenna 43 is designated;
"D" ⇒ one of the antennas 41, 42 and 43 is automatically selected.

Item (3) "SS-TX" is for switching ON/OFF of signal output from the microcomputer 67 to the antennas 26 and 27 of the video transmitting unit 20.

Selections:
"ON" ⇒ the antennas 26 and 27 of video transmitting unit 20 are functioning;
"OFF" ⇒ the antennas 26 and 27 of video transmitting unit 20 are not functioning.

In the case of Fig. 6, "SS-TX" is "ON". Therefore, it is apparent that the antennas 26 and 27 of the video transmitting unit 20 subject to the inspection are functioning. Further, "ANT-TX" is "L", and "ANT-RX" is "L". This means that the antennas 26 and 41 are functioning.

Note that if the selection is "D", the antennas are selected according to an order which is determined beforehand in the microcomputers 67 and 75. Data regarding the order of antenna selection is stored in the ROMs 68 and 76, and the antennas are selected according to this data. In this case, the microcomputers 64 and 75 of the video transmitting unit 20 and the display unit 30 automatically select the antennas to be functioned. This saves a labor of the worker in charge of the inspection.

Fig. 7 illustrates the timing of switching on/off of the signal output from the microcomputer 67 to the antennas 26 and 27 of a video transmitting unit 20 in the inspection process. As illustrated, the antennas of the video transmitting unit 20 which is not being inspected is deactivated, and an associated display unit 30 therefore displays on its display screen "SS-TX" is "OFF".

Next, at the time of inspecting the video transmitting unit 20, an antennas of the video transmitting unit 20 is activated, and the associated display unit 30 displays on its display screen "SS-TX" is "ON". Then, after the inspection is completed, the antenna of the video transmitting unit 20 is deactivated, and the associated display unit 30 displays on its screen "SS-TX" is "OFF".

In the present embodiment, the antennas of video transmitting units 20 not being inspected are deactivated. Therefore, in the display unit 30 being inspected, an electric wave from the video transmitting unit 20 being inspected is not interfered by an electric wave from a video transmitting unit 20 not being inspected. Accordingly, during the inspection process, a transmittance/reception inspection can be conducted without an operation for turning on/off the video transmitting unit 20. This improves working efficiency.

Further, the setting item SS-TX, for changing over an RF output function of the wireless transmitting/receiving means 65 in the video transmitting unit 20, is provided only for use in the inspection process, so that a user is not easily able to change over the RF output function. This prevents an operation mistake by a user.

Note that a displayed symbol representing an antenna does not have to be in the form of text, and the displayed symbol may be in the form of an icon. Alternatively, the antennas may be respectively represented by different colors.

As described, the display means 72 displays a symbol representing the antenna being functioning. Thus, in the transmittance/reception inspection, the worker is easily able to recognize which one of the antennas is inspected. Further, by superimposing the antenna symbol on a video signal being received, the worker is able to identify and confirm the antenna currently functioning, while confirming the reception status of the wireless communications system.

Next described is how a communications channel is set in the inspection (repairing) process. In general, a plurality of inspection processes are conducted in a same room, for the purpose of promoting efficiency of overall inspection processes. In such a case, interference may occur, if wireless transmission is performed in a different inspection process.

In order to avoid the interference, a communications channel to be used is set for each inspection process involving wireless transmission. For example, the display screen in Fig. 6 displays "CH: A". This means that a communications channel A is used.

Accordingly, if the number of settable communications channels is large, it is possible to carry out a large number of inspection processes each involving wireless transmission. This allows promotion of the efficiency of the inspection processes. On the contrary, in consideration of how a purchased wireless communications system 10 is used, the number of communications channel needed for avoiding jamming is 3 or so at the most.

In view of that, in the present embodiment, all the usable communications channels are used in the inspection processes, and the number of the usable communications channels is limited after the inspection process is finished. That is, after the inspection process and the shipment, the number of usable communications channels in a wireless communications system 10 is less than the number of communications channels which are actually settable in the wireless communications system 10.

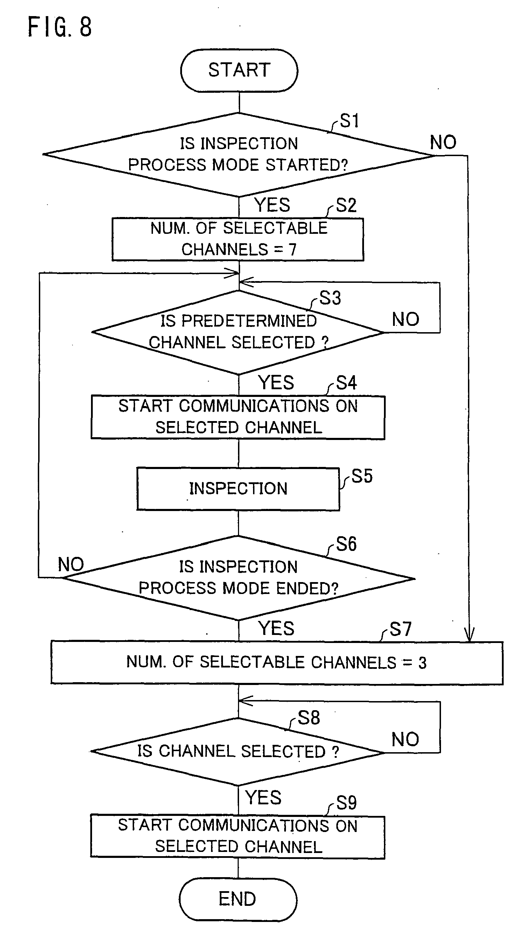

Fig. 8 is a flowchart showing the steps of setting the communications channels. First, the microcomputers 67 and 75 confirm whether or not they are in an inspection process mode which indicates that the inspection process is in process (S1). If the microcomputers 67 and 75 are in the inspection process mode, the process proceeds to S2. On the contrary, the process will proceed to S7, if the microcomputers 67 and 75 are not in the inspection process mode.

In S2, the microcomputers 67 and 75 determine that the number of selectable communications channels is 7. Next, the microcomputers 67 and 75 enter a waiting status until (i) the wireless communications system 10 is in an inspection process involving wireless transmission, and (ii) a predetermined communications channel for use in the inspection process is selected (S3). When the predetermined channel is selected, wireless communications on the selected communications channel is started between the pair of a video transmitting unit 20 and the display unit 30 (S4), and the inspection process is carried out (S5).

After the inspection, the microcomputers 67 and 75 judges whether or not the inspection process mode has ended: i.e., whether or not all inspection processes requiring wireless transmission are completed (S6). If the inspection process mode is not ended, the wireless communications system 10 still needs to undergo an inspection process requiring wireless transmission. The process therefore returns to S3, and the above described steps are repeated.

In S1, if the microcomputers 67 and 75 are not in the inspection process mode, or if the inspection process mode has ended in S6, the microcomputers 67 and 75 set the number of selectable communications channels to 3 (S7). This step is possible by causing the microcomputers 67 and 75 to respectively indicate, to the wireless transmitting/ receiving means 65 and 79, communications channels which are not allowed to be used.

Thus, the number of user-selectable communications channels is limited. Note that it may be the microcomputers 67 and 75 which automatically set which three channels out of the seven channels are set as the user-selectable communications channels. Alternatively, it is possible that the worker uses the remote controller 80 to indicate to the microcomputer 67 and 75 which three channels out of the seven channels are set as the user-selectable communications channels. In the former case, the three channels may be set randomly or in accordance with a predetermined order.

Note, however, that communications on a communications channel nearby the boundary of the frequency band used in the wireless communications system 10 of the present invention may cause deterioration in a communications quality, due to an interference from communications in a different type of wireless communications system. On this account, it is preferable that the three communications channels be successively determined from a communications channel in the center of the used frequency band.

Incidentally, for example, the problem of deterioration in the communications quality is prevented, if a wireless communications system of different type is not placed in a manufacturing site such as a place where an inspection process is carried out. In view of that, it is preferable that the communications channel nearby the boundary be excluded from the usable communications channels, by making such a communications channel unusable before the shipment.

When a user selects a communications channel from the selectable communications channels, or when the wireless communications system 10 automatically selects the communications channel (S8), wireless communications on the selected communications channel is started between a pair of the video transmitting unit 20 and the display unit 30 (S9).

In the wireless communications system 10 having been shipped, the number of communications channels a user or the like can use is less than the number of settable communications channels. Therefore, the user is not troubled in selecting the communications channel.

Further, the number of user-selectable communications channels is less than the number of communications channels selectable in the inspection process. This saves a user from being unnecessarily troubled at the time of carrying out an adjustment, while preventing interference from an adjacent wireless communications system in the production line.

Further, if the user-selectable communications channels are randomly set at the end of the inspection process, it is less likely that shipped wireless communications systems have the same selectable communications channels. Thus, interference from another system is more effectively prevented, even when a user carries out an adjustment.

In the case where the selectable communications channels are randomly set by the microcomputers 67 and 75 in S7 shown in Fig. 8, the selectable communications channels may be set as follows. Namely, one of the microcomputers 67 and 75 randomly determines the selectable communications channels, and send information about the determined communications channels to another one of the microcomputers 67 and 75 via a predetermined communications channel. Through the process, the determined communications channels are set as the selectable communications channels in both of the microcomputers 67 and 75. Note that the set communications channels do not have to include the predetermined communications channel.

Alternatively, the selectable communications channels may be randomly determined by using the remote controller 80, and the setting information of the communications channels may be transmitted to the microcomputers 67 and 75.

The present invention is not limited to the embodiments above, but may be altered within the scope of the claims. An embodiment based on a proper combination of technical means disclosed in different embodiments is encompassed in the technical scope of the present invention.

For example, in the above embodiment, the limitation of the usable communications channels is carried out in both the video transmitting unit 20 and the display unit 30. However, the limitation may be carried out in only one of the video transmitting unit 20 and the display unit 30. This also allows the limitation of the usable communications channels in the wireless communications system 10. This is because, in order to perform wireless communications between the units, both of the units needs to use a communications channel which is usable in both unit.

Note, however, that the limitation of the usable communications channels is preferably carried out in both of the video transmitting unit 20 and the display unit 30, because of the following reason. Namely, in most cases, it is necessary to search for a partner unit, and to establish a communications link with the found partner unit, before wireless communications is performed. In the process of searching the partner unit, one communications channel is selected, and the partner unit is called via the selected communications channel. Then, another communications channel is selected, and the process is repeated until the partner unit responds to the call. Accordingly, it takes a longer time for a unit whose communications channels are not limited to search its the partner unit, when compared with a unit whose communications channels are limited. Thus, when comparing (i) a case where the number of communications channels is limited in both units with (ii) a case where the number of the communications channels are limited only in one of the units 20 and 30, it is more likely that the communications link is more swiftly established in the former case.

Further, the wireless communications system of the present invention may be as follows. Namely, in the above configuration of the wireless communications system of the present invention, the user-selectable communications channels may be channels successively selected from channels assigned on a frequency-by-frequency basis, in order from a channel at the center of a frequency band which is usable in said wireless communications system.

Further, for example, a storage medium for storing a control program which is executed by the microcomputers 67 and 75 may be a tape, such as a magnetic tape and a cassette tape; a magnetic disk, such as a flexible disk and a hard disk; a disc, such as a CD-ROM/MO/MD/DVD/CD-R; a card, such as an IC card (inclusive of a memory card) and an optical card; and a semiconductor memory, such as a mask ROM, an EPROM (erasable programmable read only memory), an EEPROM (electrically erasable programmable read only memory), or a flash ROM.

Further, the video transmitting unit 20 and/or the display unit 30 may be configured so that the unit(s) can be connected to a communication network, and the control program may be distributed via the communication network. Such a communication network is not particularly limited, and the communication network may be: internet; intranet; extranet; LAN; ISDN; VAN; CATV communication network; virtual private network; telephone line; mobile communications network; satellite communications network; or the like. Further, a transmission medium constituting the communication network is not particularly limited, and the transmission medium may be: wired media such as IEEE1394, USB, power line communication, cable TV lines, telephone lines, and ADSL lines; infrared light such as IrDA and remote controller; electric waves such as Bluetooth^{®}, IEEE802.11, HDR, mobile telephone network, satellite connection, and terrestrial digital broadcasting network. It is also noted the present invention may be realized by a carrier wave or as data signal sequence, which are realized by electronic transmission of the program code.

### INDUSTRIAL APPLICABILITY

A wireless communications system of the present invention is suitable for a home-use audiovisual network system, such as a wireless TV receiver with a detachable display, in which system video data and/or audio data is wirelessly transmitted. However, the present invention is not limited to this, and the present invention is applicable to various wireless communications devices such as mobile phone/PHS^{®}, a mobile information terminals such as PDA (Personal Digital Assistants), or the like.

## Claims

1. A wireless communications system including a transmitting device and a receiving device each of which is capable of performing wireless communications on a plurality of communications channels, wherein:
the number of user-selectable communications channels which a user in general is able to select is less than the number of communications channels set at a time of an inspection process.

2. The wireless communications system as set forth in claim 1, wherein:
said user-selectable communications channels are randomly set at the end of the inspection process.

3. The wireless communications system as set forth in claim 1, wherein:
said user-selectable communications channels are channels successively selected from channels assigned on a frequency-by-frequency basis, in order from a channel closer to the center of a usable frequency band in said wireless communications system.

4. A wireless communications system including a transmitting device and a receiving device each of which is capable of performing wireless communications on a plurality of communications channels, wherein:
the number of usable communications channels is less than the number of settable communications channels in said transmitting device and/or receiving device.

5. The wireless communication system as set forth in claim 4, comprising:
channel limitation means for selecting the usable communications channels from the settable communications channels; and
remote instruction means for (i) determining at least one of the usable communications channels and (ii) remotely indicating, to the channel limitation means, said at least one of communications channels determined.

6. The wireless communications system as set forth in claim 4, wherein:
each of said transmitting device and the receiving device includes channel limitation means for selecting the usable communications channels from said settable communications channels; and
the channel limitation means of one of said transmitting device and the receiving device (i) determines at least one of said usable communications channels and (ii) wirelessly transmits information of said at least one of usable communications channels determined, to the channel limitation means of another one of said transmitting device and the receiving device, via a predetermined communications channel.

7. The wireless communications system as set forth in claim 5 or 6, wherein:
said channel limitation means randomly selects the usable communications channels from the settable communications channels.

8. The wireless communications system as set forth in any one of claims 5 to 7, wherein:
amongst channels assigned on a frequency-by-frequency basis, said channel limitation means excludes, from a choice of the usable communications channels, a channel nearby the boundary of a usable frequency band in the wireless communications system.

9. A transmitting device for use in the wireless communications system set forth in any one of claims 1 to 8.

10. A receiving device for use in the wireless communications system set forth in any one of claims 1 to 8.

11. A method for controlling a wireless communications system including a transmitting device and a receiving device each of which is capable of performing wireless communications on a plurality of communications channels,
the method comprising the step of:
selecting one or more usable communications channels from settable communications channels, in said transmitting device and/or receiving device.

12. A wireless communications system controlling program for operating the wireless communications system set forth in any one of claims 5 to 8, wherein:
said program causes a computer to function as said channel limitation means.

13. A storage medium storing therein said wireless communications system controlling program set forth in claim 12.
